# EUROPEAN PATENT SPECIFICATION

(11) **EP 2 468 835 B1**
(45) Date of publication and mention of the grant of the patent: **02.01.2019**
(21) Application number: 10809787.4
(22) Date of filing: 28.06.2010
(51) Int. Cl.: C09J 163/00, C09J 11/04, G02B 5/30

(54) **CATIONICALLY POLYMERIZABLE ADHESIVE AND POLARIZING PLATE OBTAINED USING SAME**
KATIONISCH POLYMERISIERBARER HAFTSTOFF UND DARAUS GEWONNENE POLARISIERUNGSPLATTE
ADHÉSIF POLYMÉRISABLE PAR VOIE CATIONIQUE ET PLAQUE DE POLARISATION OBTENUE À L'AIDE DE CELUI-CI

(30) Priority: 21.08.2009 JP 2009191954
(43) Date of publication of application: 27.06.2012
(73) Proprietor: DIC Corporation, Tokyo 174-8520 (JP)
(72) Inventor: SAKAMOTO Takaaki, Takaishi-shi Osaka 592-0001 (JP); TANAKA Koujirou, Takaishi-shi Osaka 592-0001 (JP)
(74) Representative: Adam, Holger
(86) International application number: PCT/JP2010/060953
(87) International publication number: WO 2011/021441

(56) References cited:
- EP-A1- 2 067 810
- WO-A1-2008/041409
- JP-A- 2005 181 817
- JP-A- 2007 169 337
- JP-A- 2008 111 105
- JP-A- 2008 169 327
- JP-A- 2009 007 404
- JP-A- 2009 079 070
- JP-A- 2009 168 903
- JP-A- 2009 197 116
- JP-A- 2009 227 804

## Description

### Technical Field

The present invention relates to a cationically polymerizable adhesive that is usable for various applications including, for example, production of polarizing plates used for liquid crystal displays and the like.

### Background Art

Adhesives that are cationically polymerizable adhesives, which are less likely to undergo curing inhibition due to oxygen in the air and are capable of undergoing a curing reaction even after supply of energy with ultraviolet rays or the like is stopped, have been attracting attention. In recent years, cationically polymerizable adhesives having various characteristics have been reported. EP2067810 discloses a cation-polymerizable resin composition comprising: a multi-branched polyether polyol having polyoxypropylene moiety, an alicyclic epoxy compound, an acid generator and an oxetane compound having an oxetane ring structure.

An example of the cationically polymerizable adhesives is a curable resin composition that has an APHA of 50 or less and contains at least one resin selected from an epoxy resin, an oxetane resin, a vinyl ether resin, and a benzooxazine resin and a polyol that is in the form of liquid at 40°C and has a number-average molecular weight of 300 or more. It is known that such a curable resin composition can form a cured product that maintains transparency and hardness without being tinted and that has toughness (for example, refer to Patent Literature 1).

In the applications of cationically polymerizable adhesives, optical applications have been attracting attention in recent years. Specifically, they are applications of producing polarizing plates used for liquid crystal displays and the like. In general, such a polarizing plate has a structure in which a transparent protective film composed of triacetyl cellulose, a thermoplastic saturated norbornene resin, or the like is placed on a polarizer constituted by a polyvinyl alcohol film impregnated with a dichroic material such as iodine. The polarizer and the protective film are bonded together with an adhesive that has various optical characteristics and a high bonding strength.

Since such a polarizing plate is generally disposed near the backlight of a television receiver, existing adhesives are affected by heat generated by the backlight and, as a result, there are cases where the bonding strength decreases over time and the adhesive layer becomes cracked.

Since liquid crystal displays are increasingly used in wider applications due to, for example, the size reduction thereof, liquid crystal displays have come to be often placed and used in environments that can have a very high temperature, such as, inside automobiles. Liquid crystal displays that can display clear images for a long period of time even under such high-temperature environments have been demanded. However, in polarizing plates produced with the above-described adhesives, there are cases where the adhesive layers are affected by heat and become cracked over time.

In the race for developing liquid crystal displays that can display images more clearly, optical components of the displays need to satisfy very high requirements for various characteristics. However, a cationically polymerizable adhesive that does not undergo a decrease in bonding strength over time due to the influence of heat or the like and that can provide an adhesive layer that does not crack in spite of the influence of heat or the like has not been found.

### Citation List

### Patent Literature

PTL 1: Japanese Unexamined Patent Application Publication No. 2007-169337

### Summary of Invention

### Technical Problem

An object of the present invention is to provide a cationically polymerizable adhesive that provides a heat-resistant bonding strength in which a decrease in the bonding strength over time due to the influence of heat or the like can be suppressed and that provides an adhesive layer that does not crack in spite of the influence of heat or the like.

The present invention also provides a polarizing plate in which separation between the protective film and the polarizer or cracking in the adhesive layer due to the influence of heat or the like is not caused. Solution to Problem

The inventors of the present invention performed studies to achieve the object and tested various combinations of cationically polymerizable compounds.

In the studies, the inventors found that an adhesive containing an oxetanyl-group-containing compound having a molecular weight of 100 to 800, an aromatic glycidyl ether, and a cationic polymerization initiator can provide a relatively high bonding strength even when affected by heat for a long period of time.

However, when such an adhesive layer is repeatedly affected by, for example, heat for a long period of time, there are cases where the adhesive layer becomes cracked or the like.

The inventors considered that the cracking of the adhesive layer may be overcome by enhancing the flexibility of the adhesive layer. The inventors then studied use of a polyol in combination with the adhesive.

Specifically, the inventors studied cationically polymerizable adhesives containing various polyols including polyether polyols, an oxetanyl-group-containing compound (B) containing an oxetanyl-group-containing compound (b) having a molecular weight of 100 to 800, a glycidyl ether (C) containing an aromatic glycidyl ether (c), and a cationic polymerization initiator (D).

As a result of the studies on the combinations of polyols and the cationically polymerizable compounds, the inventors have found that a cationically polymerizable adhesive that achieves the object of the present invention can be obtained only in the following case: as the polyol, a polyether polyol (a) that has one or more moieties selected from the group consisting of a polyoxyethylene moiety and a polyoxypropylene moiety and has a number-average molecular weight of 300 to 5000 is used as an essential component; and the polyether polyol (a) is used in a specific content of 0.05 to 3 parts by mass with respect to 100 parts by mass of the polyol (A), the oxetanyl-group-containing compound (B), and the glycidyl ether (C) in total.

The present invention relates to a cationically polymerizable adhesive including a polyol (A) containing a polyether polyol (a) that has one or more moieties selected from the group consisting of a polyoxyethylene moiety and a polyoxypropylene moiety and has a number-average molecular weight of 300 to 5000; an oxetanyl-group-containing compound (B) containing an oxetanyl-group-containing compound (b) having a molecular weight of 100 to 800; a glycidyl ether (C) containing an aromatic glycidyl ether (c); and a cationic polymerization initiator (D), wherein a content of the polyether polyol (a) is 0.05 to 3 parts by mass with respect to 100 parts by mass of the polyol (A), the oxetanyl-group-containing compound (B), and the glycidyl ether (C) in total. The present invention also relates to a polarizing plate including a polarizer and a protective film that are bonded together with the cationically polymerizable adhesive.

### Advantageous Effects of Invention

A cationically polymerizable adhesive according to the present invention can exhibit a high bonding strength for a long period of time and can provide an adhesive layer that is less likely to become cracked or the like even under the influence of heat or the like. Therefore, the adhesive can be suitably used in production and bonding of polarizing plates and various optical films of liquid crystal displays and the like, which tend to be affected by heat and the like for a long period of time.

### Description of Embodiments

The present invention provides a cationically polymerizable adhesive including a polyol (A) containing a polyether polyol (a) that has one or more moieties selected from the group consisting of a polyoxyethylene moiety and a polyoxypropylene moiety and has a number-average molecular weight of 300 to 5000; an oxetanyl-group-containing compound (B) containing an oxetanyl-group-containing compound (b) having a molecular weight of 100 to 800; a glycidyl ether (C) containing an aromatic glycidyl ether (c); a cationic polymerization initiator (D); and optionally another component, wherein a content of the polyether polyol (a) is 0.05 to 3 parts by mass with respect to 100 parts by mass of the polyol (A), the oxetanyl-group-containing compound (B), and the glycidyl ether (C) in total.

The polyol (A) used in the present invention will be first described.

The polyol (A) used in the present invention contains, as an essential component, the polyether polyol (a) that has one or more moieties selected from the group consisting of a polyoxyethylene moiety and a polyoxypropylene moiety and has a number-average molecular weight of 300 to 5000; and may optionally contain another hydroxy-group-containing compound.

In the present invention, the polyether polyol (a) that has one or more moieties selected from the group consisting of a polyoxyethylene moiety and a polyoxypropylene moiety and has a number-average molecular weight of 300 to 5000 is used as the polyol (A); and the specific polyether polyol (a) is used in a content of 0.05 to 3 parts by mass with respect to 100 parts by mass of the polyol (A), the oxetanyl-group-containing compound (B), and the glycidyl ether (C) in total. These features are important to provide a high heat-resistant bonding strength and to suppress cracking of an adhesive layer.

When the entire amount of the polyether polyol (a) is replaced by a polyether polyol having a number-average molecular weight of about 200 to produce an adhesive, there are cases where cracking of an adhesive layer formed from the adhesive is not sufficiently suppressed. On the other hand, when the entire amount of the polyether polyol (a) is replaced by a polyether polyol having a number-average molecular weight of about 6000 to produce an adhesive, it is difficult to control the curability of the adhesive upon exposure to ultraviolet rays and there are cases where the bonding strength is decreased over time or the adhesive layer becomes cracked under the influence of heat or the like. Accordingly, the polyether polyol (a) preferably has a number-average molecular weight of 300 to 4000, more preferably 300 to 3000.

Even when the specific polyether polyol (a) is used, when the content of the specific polyether polyol (a) is 4 or 5 parts by mass with respect to 100 parts by mass of the polyol (A), the oxetanyl-group-containing compound (B), and the glycidyl ether (C) in total in the cationically polymerizable adhesive, there are cases where the bonding strength is decreased over time under the influence of heat and, for example, a polarizer and a protective film may be eventually separated from each other.

The content of the polyether polyol (a) is highly preferably 0.1 to 1.5 parts by mass with respect to 100 parts by mass of the polyol (A), the oxetanyl-group-containing compound (B), and the glycidyl ether (C) in total in the cationically polymerizable adhesive. In this case, the advantages of the present invention are further enhanced.

The content of the polyether polyol (a) is preferably 90 to 100 parts by mass, more preferably 95 to 100 mass%, with respect to the entire amount of the polyol (A).

The polyether polyol (a) has one or more moieties selected from the group consisting of a polyoxyethylene moiety and a polyoxypropylene moiety. Examples of the polyether polyol (a) include polyoxyethylene glycol, polyoxypropylene glycol, a random copolymer having both the polyoxyethylene moiety and the polyoxypropylene moiety, and a block copolymer having both the polyoxyethylene moiety and the polyoxypropylene moiety.

Specific examples thereof include polyoxyethylene glycols "PEG #300, 400, 600, 1000, 1500, 1540, 2000, and 4000" manufactured by NOF CORPORATION; and copolymers between polyoxyethylene glycol and polyoxypropylene glycol "ED-26, ED-28, ED-36, ED-37A, and ED-56" manufactured by Mitsui Chemicals, Inc.

The polyether polyol (a) may have a structure in which two or more hydroxy groups are bonded to one end of a polyalkyleneoxide chain having one or more moieties selected from the group consisting of a polyoxyethylene moiety and a polyoxypropylene moiety. Specific examples thereof include Ymer N120 (manufactured by Perstorp). When such a polyether polyol in which two or more hydroxy groups are bonded to one end of a polyalkyleneoxide chain is used, an adhesive layer having a relatively high heat-resistant bonding strength can be formed.

Of the above-described polyether polyols, a polyether polyol having a polyoxyethylene moiety is preferably used as the polyether polyol (a) because the effect of suppressing cracking of the adhesive layer is markedly provided. The polyether polyol (a) preferably includes 50 to 100 mass% of the polyoxyethylene moiety with respect to the entirety of the polyether polyol (a). In particular, the polyether polyol (a) is preferably a polyoxyethylene glycol including 95 to 100 mass% of the polyoxyethylene moiety with respect to the entirety of the polyether polyol (a).

The polyether polyol (a) can be produced by addition polymerization of an initiator composed of a compound having two or more active hydrogen atoms and an alkylene oxide essentially including ethylene oxide or propylene oxide. Specifically, the polyether polyol (a) is produced by, for example, adding the alkylene oxide and the like collectively or individually in the presence of a catalyst such as bromine trifluoride and the initiator, by mixing the mixture to react. When a copolymer having both a polyethylene oxide moiety and a polypropylene oxide moiety is produced as the polyether polyol (a), preferably used are a random copolymer produced by collectively mixing ethylene oxide and propylene oxide to react in the presence of the initiator, and a block copolymer produced by polymerizing ethylene oxide and propylene oxide in the presence of the initiator to prepare polyoxyethylene and polyoxypropylene and by copolymerizing the polyoxyethylene and the polyoxypropylene.

Examples of the initiator used in the production of the polyether polyol (a) include ethylene glycol, propylene glycol, butanediol, 1,6-hexanediol, neopentyl glycol, cyclohexanediol, cyclohexanedimethanol, glycerin, trimethylolpropane, trimethylolethane, hexanetriol, pentaerythritol, sorbitol, mannitol, sorbitan, diglycerin, and dipentaerythritol.

The alkylene oxide that can react with the initiator may be an alkylene oxide including ethylene oxide or propylene oxide.

The polyether polyol (a) may optionally include, in addition to the polyoxyethylene moiety and the polyoxypropylene moiety, another moiety. Examples of the other moiety include a polyoxybutylene moiety.

The other moiety can be introduced into the polyether polyol (a) by, for example, as the initiator, using another initiator other than ethylene glycol and propylene glycol or by using, as the alkylene oxide, another alkylene oxide other than ethylene oxide and propylene oxide in combination.

Examples of the other alkylene oxide include butylene oxide, styrene oxide, γ-chloropropylene oxide (epichlorohydrin), and tetramethylene oxide (tetrahydrofuran).

The polyol (A) may optionally contain, in addition to the polyether polyol (a), another hydroxy-group-containing compound. The hydroxy-group-containing compound such as a polyether polyol other than the polyether polyol (a), a polyester polyol, a polycarbonate polyol, or another low-molecular-weight polyol can be properly used.

To achieve a high heat-resistant bonding strength and to suppress cracking of the adhesive layer, the polyol (A) is preferably used in the range of 0.05 to 5 parts by mass with respect to 100 parts by mass of the polyol (A), the oxetanyl-group-containing compound (B), and the glycidyl ether (C) in total in a cationically polymerizable adhesive according to the present invention, more preferably in the range of 0.05 to 3 parts by mass, more preferably in the range of 0.1 to 1.5 parts by mass.

Next, the oxetanyl-group-containing compound (B) used in the present invention will be described.

The oxetanyl-group-containing compound (B) used in the present invention essentially contains the oxetanyl-group-containing compound (b) having a molecular weight of 100 to 800 and may optionally contain an oxetanyl-group-containing compound having a molecular weight outside the range.

It is important that the oxetanyl-group-containing compound (b) used in the present invention has a molecular weight of 100 to 800. For example, when a polarizer and a protective film are bonded together, in general, an adhesive layer having a small film thickness (several micrometers) is often used to make curing sufficiently proceed. To uniformly apply an adhesive so as to form a film having such a thickness, the adhesive needs to have a low viscosity. To obtain such an adhesive having a low viscosity, use of the oxetanyl-group-containing compound having the relatively low molecular weight is necessary. For example, when the entire amount of the oxetanyl-group-containing compound (b) is replaced by an oxetanyl-group-containing compound having a molecular weight of about 1500 to produce an adhesive, the adhesive has a relatively high viscosity and hence it is difficult to form a thin film. Accordingly, there are cases where the resultant adhesive layer has poor curability and the bonding strength is decreased over time under the influence of heat or the like.

The oxetanyl-group-containing compound (b) more preferably has a molecular weight of 100 to 500, particularly preferably has a molecular weight of 150 to 400, in view of further enhancing application processability, curability, and the like of a cationically polymerizable adhesive according to the present invention and, as a result, suppressing a decrease in the bonding strength over time under the influence of heat or the like. The molecular weight is determined by calculation based on the formula weight.

The oxetanyl-group-containing compound (b) may be a compound (b1) containing two or more oxetanyl groups or a compound (b2) containing a single oxetanyl group. Of these, the compound (b1) containing two or more oxetanyl groups is preferably used in view of suppressing a decrease in the bonding strength under the influence of heat or the like.

The compound (b1) containing two or more oxetanyl groups may contain a plurality of oxetane rings contributing to cationic polymerization, preferably two to four oxetane rings.

Specifically, the compound (b1) used in the present invention may be represented by, for example, the following general formula (1) or (2) and such compounds may be used alone or in combination of two or more thereof.

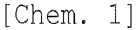

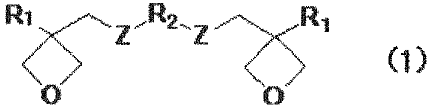

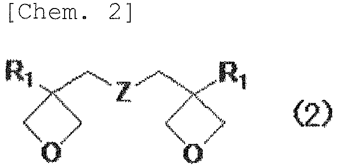

In the general formulae (1) and (2), R₁ each independently represent a hydrogen atom, a linear, branched, or cyclic alkyl group having 1 to 6 carbon atoms, an allyl group, an aryl group, an aralkyl group, a furyl group, or a thienyl group; R₂ each independently represent a divalent organic residue; and Z each independently represent an oxygen atom or a sulfur atom.

As for R₁, examples of the linear, branched, or cyclic alkyl group having 1 to 6 carbon atoms include a methyl group, an ethyl group, a n- or i-propyl group, a n-, i-, or t-butyl group, a pentyl group, a hexyl group, and a cyclohexyl group; examples of the aryl group include a phenyl group, a naphthyl group, a tolyl group, and a xylyl group; and examples of the aralkyl group include a benzyl group and a phenethyl group.

Examples of the divalent organic residue represented by R₂ in the general formula (1) include a linear, branched, or cyclic alkylene group, a poly(oxyalkylene) group having 4 to 30 carbon atoms, a phenylene group, a xylylene group, and moieties represented by general formulae (3) and (4) below.

The linear, branched, or cyclic alkylene group constituting R₂ is preferably an alkylene group having 1 to 15 carbon atoms such as a methylene group, an ethylene group, a 1,2- or 1,3-propylene group, a butylene group, or a cyclohexylene group. The poly(oxyalkylene) group having 4 to 30 carbon atoms is preferably a group having 4 to 8 carbon atoms, for example, preferably a poly(oxyethylene) group or a poly(oxypropylene) group.

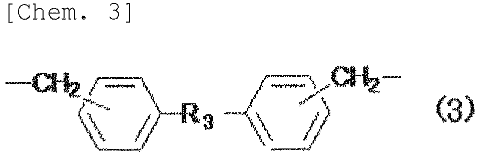

R₃ in the general formula (3) represents an oxygen atom, a sulfur atom, CH₂, NH, SO, SO₂, C(CF₃)₂, or C(CH₃)₂.

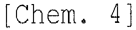

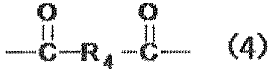

R₄ in the general formula (4) represents an alkylene group having 1 to 6 carbon atoms, an arylene group, or a functional group represented by the following general formula (5).

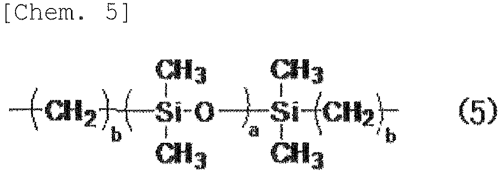

In the general formula (5), a represents an integer of 1 to 6 and b represents an integer of 1 to 15.

In the general formula (5), b preferably represents an integer of 1 to 3.

Examples of the oxetane compound having two to four oxetane rings that is commercially available include ARON OXETANE OXT-221, ARON OXETANE OXT-121, ARON OXETANE OXT-223 (these are manufactured by TOAGOSEI CO., LTD.) and ETERNACOLL OXBP (manufactured by Ube Industries, Ltd.).

The compound (b1) preferably has a molecular weight of 100 to 800. The compound (b1) is more preferably represented by the general formula (1), more preferably, bis[1-ethyl(3-oxetanyl)]methyl ether represented by the general formula (1) where R₁ represents an ethyl group, R₂ represents methylene, and Z represents an oxygen atom. Use of bis[1-ethyl(3-oxetanyl)] methyl ether is preferred because a cured adhesive film can have a small thickness; and curability can be further enhanced and a decrease in the bonding strength due to heat, light, and the like can be suppressed for a long period of time.

For example, the compound (b2) containing a single oxetanyl group and used in the present invention may be represented by the following general formula (6).

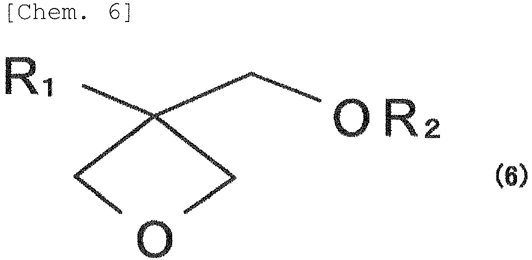

(In the general formula (6), R₁ represents a hydrogen atom, an alkyl group having 1 to 8 carbon atoms, an alkoxyalkyl group having 1 to 5 carbon atoms, or a hydroxyalkyl group having 1 to 6 carbon atoms; R₂ represents a hydrogen atom, an alkyl group that may be branched and has 1 to 10 carbon atoms, an alicyclic moiety, or an aromatic moiety.)

Examples of the alkyl group having 1 to 8 carbon atoms that may constitute R₁ in the general formula (6) include a methyl group, an ethyl group, a n-propyl group, an i-propyl group, and a 2-ethylhexyl group.

Examples of the alkoxyalkyl group having 1 to 5 carbon atoms that may constitute R₁ in the general formula (6) include a methoxymethyl group, an ethoxymethyl group, a propoxymethyl group, a methoxyethyl group, an ethoxyethyl group, and a propoxyethyl group.

Examples of the hydroxyalkyl group having 1 to 6 carbon atoms that may constitute R₁ in the general formula (6) include a hydroxymethyl group, a hydroxyethyl group, and a hydroxypropyl group.

Examples of the alkyl group that may be branched, has 1 to 10 carbon atoms, and may constitute R₂ in the general formula (6) include linear alkyl groups such as a methyl group, an ethyl group, and a propyl group and branched alkyl groups such as a 2-ethylhexyl group.

Examples of the alicyclic moiety that may constitute R₂ in the general formula (6) include a cyclohexyl group and the like. The cyclohexyl group and the like may have an alkyl group or the like instead of a hydrogen atom.

Examples of the aromatic moiety that may constitute R₂ in the general formula (6) include a phenyl group and the like. The phenyl group and the like may have an alkyl group or the like instead of a hydrogen atom.

The compound (b2) preferably has a molecular weight of 100 to 500. More preferably, the compound (b2) is one or more selected from the group consisting of 3-hydroxymethyl-3-ethyloxetane, 3-ethyl-3-(phenoxymethyl)oxetane, 3-ethyl-3-(2-ethylhexyloxymethyl)oxetane, and 3-ethyl-3-(cyclohexyloxy)methyloxetane.

As for the oxetanyl-group-containing compound (B), the oxetanyl-group-containing compound (b) may be optionally combined with an oxetanyl-group-containing compound having a molecular weight outside the range of 100 to 800.

As for the oxetanyl-group-containing compound (B), the compound (b1) containing two or more oxetanyl groups is preferably used in the range of 90 to 100 parts by mass, preferably in the range of 95 to 100 parts by mass, with respect to 100 parts by mass of the oxetanyl-group-containing compound (B) in view of allowing the formation of a thin adhesive film and achieving high curability and high heat-resistant bonding strength.

The oxetanyl-group-containing compound (B) is preferably used in the range of 20 to 80 parts by mass, preferably in the range of 40 to 70 parts by mass, with respect to 100 parts by mass of the polyol (A), the oxetanyl-group-containing compound (B), and the glycidyl ether (C) in total in a cationically polymerizable adhesive according to the present invention in view of allowing the formation of a thin adhesive film and achieving high curability and high heat-resistant bonding strength.

Next, the glycidyl ether (C) used in the present invention will be described.

The glycidyl ether (C) used in the present invention essentially contains the aromatic glycidyl ether (c) and may optionally contain another glycidyl ether.

In the present invention, it is important to use the aromatic glycidyl ether (c) having an aromatic ring moiety. When the entire amount of the aromatic glycidyl ether (c) is replaced by an aliphatic glycidyl ether to produce an adhesive, there are cases where the adhesive does not provide a high bonding strength and, for example, a bonded member eventually becomes separated.

Examples of the aromatic glycidyl ether (c) include bisphenol A glycidyl ether, bisphenol F glycidyl ether, bisphenol S glycidyl ether, and bisphenol AD glycidyl ether.

The aromatic glycidyl ether (c) is preferably bisphenol A glycidyl ether or bisphenol F glycidyl ether because curability can be further enhanced to properly adjust the hardness of the cured product and a decrease in the bonding strength due to heat, light, and the like can be suppressed for a long period of time. The aromatic glycidyl ether (c) is preferably one or more selected from the group consisting of bisphenol A diglycidyl ether and bisphenol F diglycidyl ether.

The aromatic glycidyl ether (c) preferably has two or more glycidyl ether groups in view of providing a high bonding strength, more preferably has two to six glycidyl ether groups.

The aromatic glycidyl ether (c) can be prepared by the reaction between bisphenol A or bisphenol F and epichlorohydrin or the like. There are cases where chlorine derived from the epichlorohydrin or the like partially remains in the thus-prepared aromatic glycidyl ether. In general, about several percent to less than twenty percent of chlorine often remains in commercially available glycidyl-ether-group-containing compounds.

Accordingly, in the production of the aromatic glycidyl ether (c), for example, a treatment of removing chlorine by rectification or the like is preferably performed in view of providing a higher bonding strength and suppressing discoloration and the like of a polarizer. The rectification is preferably performed, for example, at about 50°C to 200°C for about 1 to 200 hours. The amount of chlorine remaining in the aromatic glycidyl ether (c) can be measured in accordance with JIS K 1200-3-2:2000.

The aromatic glycidyl ether (c) is preferably contained in the range of 5 to 50 mass%, more preferably in the range of 10 to 40 mass%, with respect to the total mass of the oxetanyl-group-containing compound (A) and the glycidyl ether (B) in the cationically polymerizable adhesive in view of maintaining a high heat-resistant bonding strength for a long period of time. The glycidyl ether (B) encompasses glycidyl ethers other than the aromatic glycidyl ether (c), such as aliphatic glycidyl ethers described below.

As for the glycidyl ether (C) used in the present invention, in addition to the aromatic glycidyl ether (c), another glycidyl ether may be optionally used.

Examples of the other glycidyl ether include aliphatic glycidyl compounds having three glycidyl ether groups such as trimethylolpropane triglycidyl ether, glycerin triglycidyl ether, polyglycerol triglycidyl ether, and diglycerol triglycidyl ether; and glycidyl compounds having two glycidyl ether groups such as trimethylolpropane diglycidyl ether, 1,6-hexanediol diglycidyl ether, 1,4-butanediol diglycidyl ether, cyclohexanedimethanol diglycidyl ether, propylene glycol diglycidyl ether, and diethylene glycol diglycidyl ether. Examples of the other glycidyl ether also include hydrogenated bisphenol A glycidyl ether and hydrogenated bisphenol F glycidyl ether that are obtained by hydrogenating the aromatic glycidyl ether (C), and other aromatic glycidyl ethers.

In the present invention, the aromatic glycidyl ether (c) is preferably used in the range of 20 to 80 mass%, more preferably in the range of 40 to 60 mass%, with respect to the entire amount of the glycidyl ether (C).

The amount of the other glycidyl ether used is preferably similar to the amount of the aromatic glycidyl ether (c) used. Specifically, the other glycidyl ether is preferably used in the range of 20 to 80 mass%, more preferably in the range of 40 to 60 mass%, with respect to the total mass of the oxetanyl-group-containing compound (A) and the glycidyl ether (C) in the cationically polymerizable adhesive in view of maintaining a high heat-resistant bonding strength for a long period of time.

The glycidyl ether (C) is preferably used in the range of 20 to 80 parts by mass with respect to 100 parts by mass of the polyol (A), the oxetanyl-group-containing compound (B), and the glycidyl ether (C) in total.

Next, the cationic polymerization initiator (D) used in the present invention will be described.

The cationic polymerization initiator (D) used in the present invention may be, for example, a cationic polymerization photoinitiator that generates acid for initiating cationic polymerization upon irradiation with energy rays such as ultraviolet rays, or a cationic polymerization thermal initiator that generates acid under heating or the like. In particular, when polarizing plates are produced by bonding polarizers and protective films together or other optical materials are produced, cationic polymerization photoinitiators are preferably used in view of suppressing deformation, discoloration, and the like of base materials due to heat.

As for the cationic polymerization photoinitiators, for example, an onium salt in which the cation is aromatic sulfonium, aromatic iodonium, aromatic diazonium, aromatic ammonium, thianthrenium, thioxanthenium, or (2,4-cyclopentadien-1-yl)[(1-methylethyl)benzene]-Fe cation, and the anion is BF₄⁻, PF₆⁻, SbF₆⁻, or [BX₄]⁻ (where X represents a phenyl group at least substituted by two or more fluorines or trifluoromethyl groups) may be used alone or two or more of the onium salts may be used in combination.

Examples of the aromatic sulfonium salt include bis[4-(diphenylsulfonio)phenyl]sulfide bishexafluorophosphate, bis[4-(diphenylsulfonio)phenyl]sulfide bishexafluoroantimonate, bis[4-(diphenylsulfonio)phenyl]sulfide bistetrafluoroborate, bis[4-(diphenylsulfonio)phenyl]sulfide tetrakis(pentafluorophenyl)borate, diphenyl-4-(phenylthio)phenylsulfonium hexafluorophosphate, diphenyl-4-(phenylthio)phenylsulfonium hexafluoroantimonate, diphenyl-4-(phenylthio)phenylsulfonium tetrafluoroborate, diphenyl-4-(phenylthio)phenylsulfonium tetrakis(pentafluorophenyl)borate, triphenylsulfonium hexafluorophosphate, triphenylsulfonium hexafluoroantimonate, triphenylsulfonium tetrafluoroborate, triphenylsulfonium tetrakis(pentafluorophenyl)borate, bis[4-(di(4-(2-hydroxyethoxy))phenylsulfonio)phenyl]sulfide bishexafluorophosphate, bis[4-(di(4-(2-hydroxyethoxy))phenylsulfonio)phenyl]sulfide bishexafluoroantimonate, bis[4-(di(4-(2-hydroxyethoxy))phenylsulfonio)phenyl]sulfide bistetrafluoroborate, and bis[4-(di(4-(2-hydroxyethoxy))phenylsulfonio)phenyl]sulfide tetrakis(pentafluorophenyl)borate.

Examples of the aromatic iodonium salt include diphenyliodonium hexafluorophosphate, diphenyliodonium hexafluoroantimonate, diphenyliodonium tetrafluoroborate, diphenyliodonium tetrakis(pentafluorophenyl)borate, bis(dodecylphenyl)iodonium hexafluorophosphate, bis(dodecylphenyl)iodonium hexafluoroantimonate, bis(dodecylphenyl)iodonium tetrafluoroborate, bis(dodecylphenyl)iodonium tetrakis(pentafluorophenyl)borate, 4-methylphenyl-4-(1-methylethyl)phenyliodonium hexafluorophosphate, 4-methylphenyl-4-(1-methylethyl)phenyliodonium hexafluoroantimonate, 4-methylphenyl-4-(1-methylethyl)phenyliodonium tetrafluoroborate, and 4-methylphenyl-4-(1-methylethyl)phenyliodonium tetrakis(pentafluorophenyl)borate.

Examples of the aromatic diazonium salt include phenyldiazonium hexafluorophosphate, phenyldiazonium hexafluoroantimonate, phenyldiazonium tetrafluoroborate, and phenyldiazonium tetrakis(pentafluorophenyl)borate.

Examples of the aromatic ammonium salt include 1-benzyl-2-cyanopyridinium hexafluorophosphate, 1-benzyl-2-cyanopyridinium hexafluoroantimonate, 1-benzyl-2-cyanopyridinium tetrafluoroborate, 1-benzyl-2-cyanopyridinium tetrakis(pentafluorophenyl)borate, 1-(naphthylmethyl)-2-cyanopyridinium hexafluorophosphate, 1-(naphthylmethyl)-2-cyanopyridinium hexafluoroantimonate, 1-(naphthylmethyl)-2-cyanopyridinium tetrafluoroborate, and 1-(naphthylmethyl)-2-cyanopyridinium tetrakis(pentafluorophenyl)borate.

Examples of the thioxanthenium salt include S-biphenyl 2-isopropyl thioxanthenium hexafluorophosphate.

Examples of the (2,4-cyclopentadien-1-yl)[(1-methylethyl)benzene]-Fe salt include (2,4-cyclopentadien-1-yl)[(1-methylethyl)benzene]-Fe(II)hexafluorophosphate, (2,4-cyclopentadien-1-yl)[(1-methylethyl)benzene]-Fe(II) hexafluoroantimonate, 2,4-cyclopentadien-1-yl)[(1-methylethyl)benzene]-Fe(II)tetrafluoroborate, and 2,4-cyclopentadien-1-yl)[(1-methylethyl)benzene]-Fe(II) tetrakis(pentafluorophenyl)borate.

Examples of the cationic polymerization photoinitiator that is commercially available include CPI-100P, CPI-101A, CPI-200K (these are manufactured by San-Apro Ltd.); CYRACURE photo-curing initiator UVI-6990, CYRACURE photo-curing initiator UVI-6992, CYRACURE photo-curing initiator UVI-6976 (these are manufactured by Dow Chemical Japan Ltd.); ADEKA OPTOMER SP-150, ADEKA OPTOMER SP-152, ADEKA OPTOMER SP-170, ADEKA OPTOMER SP-172, ADEKA OPTOMER SP-300 (these are manufactured by ADEKA CORPORATION); San-Aid SI-60L, San-Aid SI-80L, San-Aid SI-100L, San-Aid SI-110L, San-Aid SI-180L, San-Aid SI-110, San-Aid SI-180 (these are manufactured by SANSHIN CHEMICAL INDUSTRY CO., LTD.); ESACURE 1064, ESACURE 1187 (these are manufactured by Lamberti S.p.A.); Omnicat 550 (manufactured by IGM Resins B.V.); IRGACURE 250 (manufactured by Ciba Specialty Chemicals); and RHODORSIL PHOTOINITIATOR 2074 (manufactured by Rhodia Japan).

Examples of the cationic polymerization thermal initiator include benzylsulfonium salts, thiophenium salts, thiolanium salts, benzylammonium salts, pyridinium salts, hydrazinium salts, carboxylates, sulfonates, and amine imide.

Examples of the cationic polymerization thermal initiator that is commercially available include "ADEKA OPTON CP77", "ADEKA OPTON CP66" (these are manufactured by ADEKA CORPORATION); and "San-Aid SI-60L", "San-Aid SI-80L", and "San-Aid SI-100L" (these are manufactured by SANSHIN CHEMICAL INDUSTRY CO., LTD.).

The amount of the cationic polymerization initiator (D) used is not particularly limited and is preferably in the range of 0.1 to 20 mass%, more preferably 1 to 15 mass%, with respect to the entire amount of the cationically polymerizable adhesive.

A cationically polymerizable adhesive according to the present invention may optionally contain an alicyclic epoxy compound (E), an epoxy-group-containing silane compound (F), or the like in addition to the polyol (A), the oxetanyl-group-containing compound (B), the glycidyl ether (C), and the cationic polymerization initiator (D).

The alicyclic epoxy compound (E) may have a plurality of alicyclic epoxy groups, preferably two to four alicyclic epoxy groups.

In the alicyclic epoxy compound (E), examples of an alicyclic epoxy compound having two alicyclic epoxy groups include 3,4-epoxycyclohexenylmethyl-3,4-epoxycyclohexane carboxylate represented by the following general formula (7) (compound represented by the general formula (7) where a is 0), a caprolactone-modified compound thereof (compound represented by the general formula (7) where a is 1), trimethylcaprolactone-modified compounds thereof (structural formulae (8) and (9)), valerolactone-modified compounds thereof (structural formulae (10) and (11)), and a compound represented by a structural formula (12).

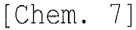

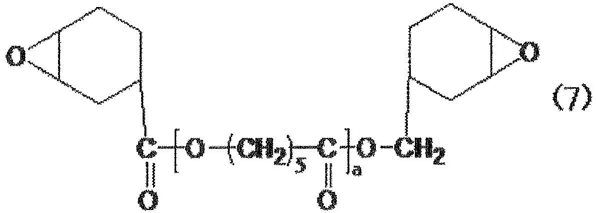

(In the general formula (7), a represents 0 or 1.)

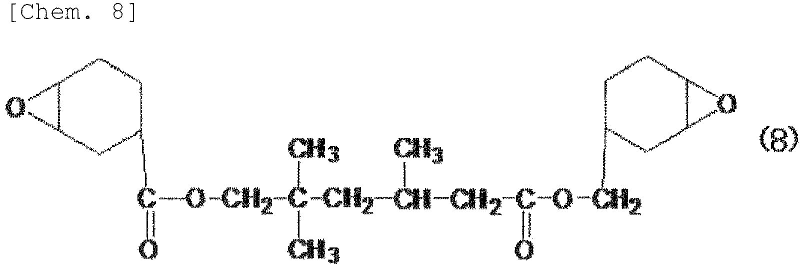

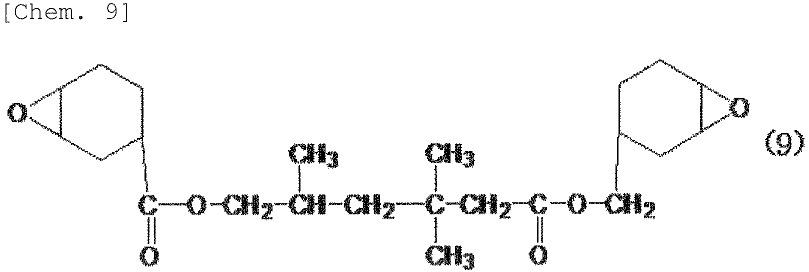

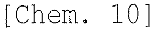

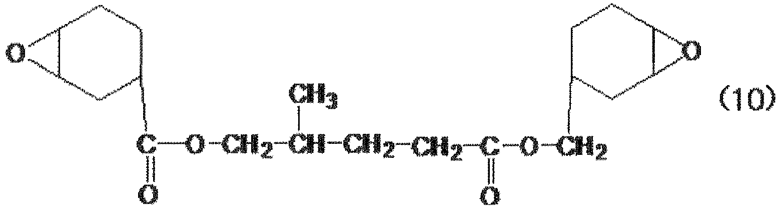

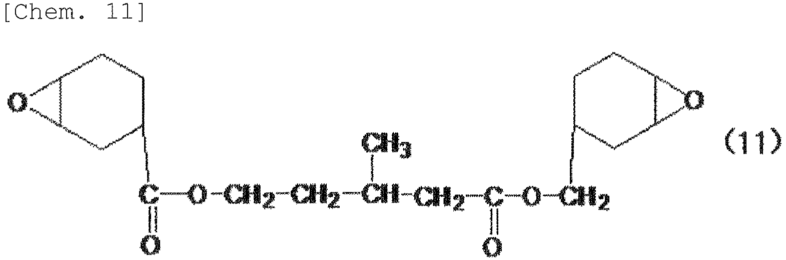

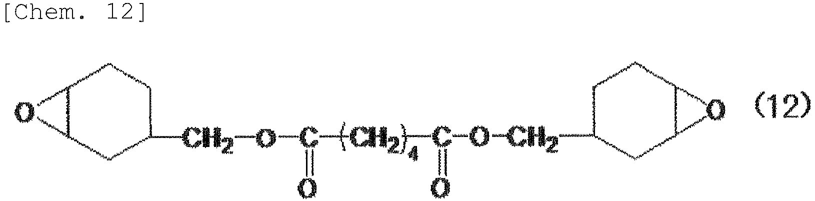

An example of the adipate-based alicyclic epoxy compound that is represented by the general formula (12) and commercially available is CYRACURE UVR-6128 (manufactured by Dow Chemical Japan Ltd.).

In the alicyclic epoxy compound (E), an alicyclic epoxy compound having two alicyclic epoxy groups may be a compound represented by the following general formula (13).

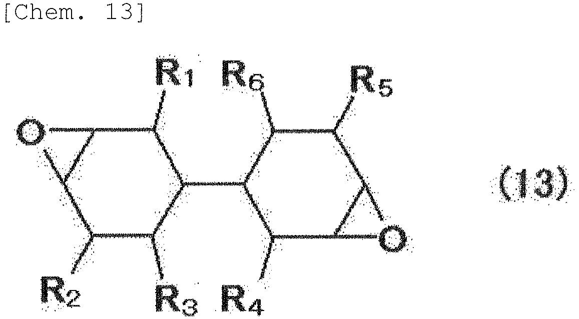

(In the general formula (13), R₁ to R₆ each independently represent a hydrogen atom or an alkyl group having 1 to 6 carbon atoms.)

Specifically, a compound represented by the general formula (13) may be dicyclohexyl-3,3'-diepoxide.

An alicyclic epoxy compound having three alicyclic epoxy groups may be a compound represented by the following general formula (14).

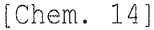

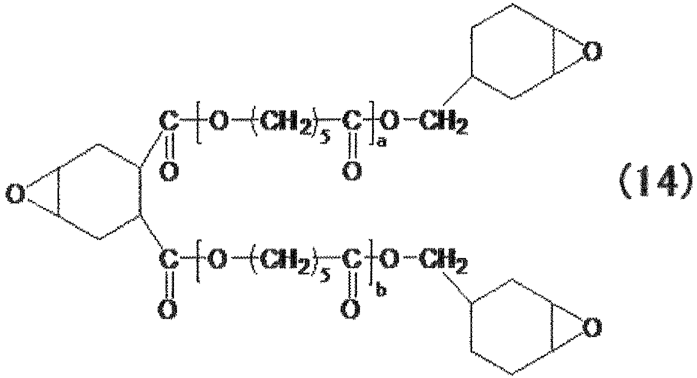

In the general formula (14), a and b each independently represent 0 or 1, and a and b may be identical to or different from each other.

Examples of the alicyclic epoxy compound that is represented by the general formula (14) and commercially available include EPOLEAD GT301 and EPOLEAD GT302 (these are manufactured by DAICEL CHEMICAL INDUSTRIES, LTD.).

An alicyclic epoxy compound having four alicyclic epoxy groups may be a compound represented by the following general formula (15).

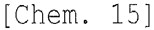

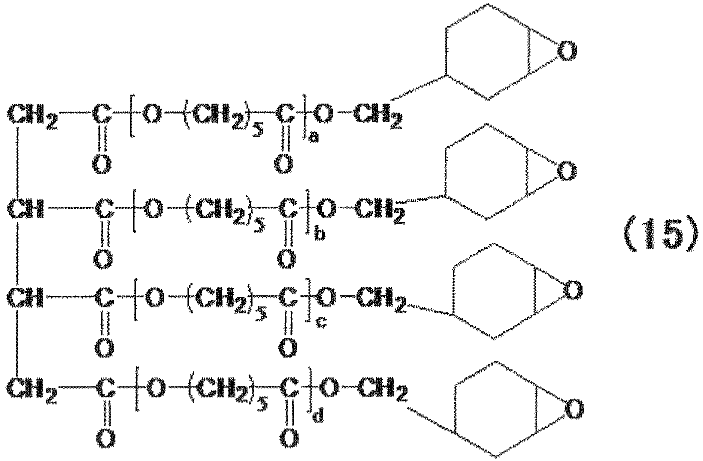

In the general formula (15), a to d each independently represent 0 or 1, and a to d may be identical to or different from each other.

Examples of the alicyclic epoxy compound that is represented by the general formula (15) and commercially available include EPOLEAD GT401 and EPOLEAD GT403 (these are manufactured by DAICEL CHEMICAL INDUSTRIES, LTD.).

The amount of the alicyclic epoxy compound (E) used is preferably in the range of 0.5 to 10 mass%, more preferably 0.7 to 5 mass%, with respect to the entire amount of a cationically polymerizable adhesive according to the present invention to make curing of the adhesive rapidly proceed.

The epoxy-group-containing silane compound (F) usable in a cationically polymerizable adhesive according to the present invention can further enhance the ordinary bonding strength of the resultant adhesive and can suppress discoloration and the like of a polarizer. Instead of the compound (F), when an aminosilane such as 3-aminopropyltriethoxysilane or a vinylsilane such as vinyltriacetoxysilane is used, the effect of suppressing discoloration of a polarizer may be slightly degraded.

Preferred examples of the epoxy-group-containing silane compound (F) include 3-glycidoxypropyltrimethoxysilane, 3-glycidoxypropyltriethoxysilane, 3-glycidoxypropylmethyldiethoxysilane, 3-glycidoxypropylmethyldimethoxysilane, 2-(3,4-epoxycyclohexyl)ethyltrimethoxysilane, and 2-(3,4-epoxycyclohexyl)ethyltriethoxysilane. In particular, one or more selected from the group consisting of 3-glycidoxypropyltriethoxysilane, 3-glycidoxypropyltrimethoxysilane, 2-(3,4-epoxycyclohexyl)ethyltrimethoxysilane, and 2-(3,4-epoxycyclohexyl)ethyltriethoxysilane are preferably used so that a decrease in the bonding strength due to the influence of heat or the like is not caused and, for example, fading of a polarizer is suppressed.

Examples of the epoxy-group-containing silane compound (F) include silicone oils represented by the following general formulae (16) and (17).

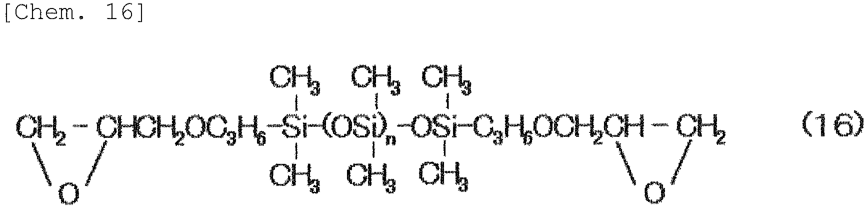

(n in the general formula (16) represents an integer of 1 or more.)

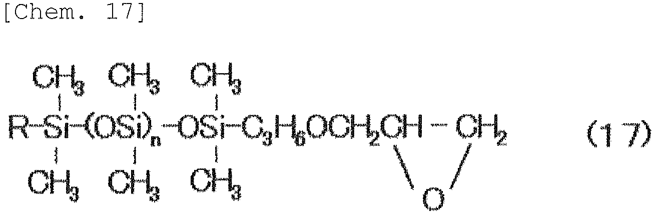

(In the general formula (16), R represents an organic group and n represents an integer of 1 or more.)

The epoxy-group-containing silane compound (F) is preferably used in the range of 0.1 to 1.5 mass% with respect to the entire amount of a cationically polymerizable adhesive according to the present invention so that a decrease in the bonding strength due to the influence of heat or the like is not caused and, for example, fading of a polarizer is suppressed.

In a cationically polymerizable adhesive used in the present invention, the content of chlorine remaining in the entire amount of the cationically polymerizable adhesive is highly preferably 1500 ppm or less in view of providing a higher heat-resistant bonding strength and suppressing, for example, discoloration of a polarizer or the like. When the chlorine content is more than 1500 ppm, discoloration of an adhesive layer or the resultant polarizing plate or a decrease in the strength may be caused.

The chlorine in the present invention denotes chlorine and chlorides derived from materials such as epichlorohydrin used in the preparation of the aromatic glycidyl ether (c), and inorganic chlorides such as sodium chloride derived from various additives that can be used in combination with an adhesive according to the present invention.

By making the chlorine content with respect to the entire amount of the cationically polymerizable adhesive be 1500 ppm or less, preferably 1000 ppm or less, more preferably 800 ppm or less, for example, fading of a polarizer or the like and an ordinary bonding strength kept over a long period of time can be achieved. The content of chlorine remaining in a cationically polymerizable adhesive according to the present invention can be measured in accordance with JIS K 1200-3-2:2000.

In particular, to further suppress, for example, discoloration of the polarizer, it is preferable to use the epoxy-group-containing silane compound (F) and to adjust the content of chlorine remaining in the cationically polymerizable adhesive to be 1500 ppm or less.

A cationically polymerizable adhesive according to the present invention can be produced by, for example, the following method.

A cationically polymerizable adhesive according to the present invention can be produced by, for example, mixing and stirring with a closed planetary mixer or the like, compounds prepared in advance: the polyol (A) containing the polyether polyol (a), the oxetanyl-group-containing compound (B) containing the oxetanyl-group-containing compound (b), the glycidyl ether (C) containing the aromatic glycidyl ether (c), and the cationic polymerization photoinitiator (D), and optionally, the alicyclic epoxy compound (E), the epoxy-group-containing silane compound (F), or the like.

The cationically polymerizable adhesive obtained by this method preferably has a viscosity of 100 mPa·s or less at 25°C so that an adhesive layer to be formed has a minimum thickness. The viscosity can be mainly adjusted by, for example, use of a diluting agent such as an oxetane compound or an alicyclic epoxy compound or use of, as the aromatic glycidyl ether (c), a liquid aromatic glycidyl ether having a low molecular weight.

A cationically polymerizable adhesive according to the present invention may optionally contain various additives as long as advantages of the present invention are not degraded.

Examples of the additives that may be used in combination include thixotropy-imparting agents, sensitizing agents, the above-described various polyols, other polyols, leveling agents, antioxidants, thickening agents, waxes, thermal stabilizers, light stabilizers, fluorescent whitening agents, foaming agents, thermoplastic resins, thermosetting resins, organic solvents, conductivity-imparting agents, antistatic agents, moisture-permeability enhancers, water-repellent agents, porous foams, compounds containing water of crystallization, fire retardants, water-absorbing agents, moisture-absorbing agents, deodorants, foam stabilizers, defoaming agents, fungicides, preservatives, anti-algae agents, anti-blocking agents, anti-hydrolysis agents, and organic and inorganic watersoluble compounds.

Examples of the thixotropy-imparting agents include surface-treated calcium carbonate, silica fine powder, bentonite, and zeolite.

When such various additives are used, the additives can be mixed, for example, with a closed planetary mixer or the like, in the mixing and stirring of the polyol (A), the oxetanyl-group-containing compound (B), the glycidyl ether (C), and the cationic polymerization photoinitiator (D), and optionally, the alicyclic epoxy compound (E), the epoxy-group-containing silane compound (F), or the like.

A cationically polymerizable adhesive according to the present invention obtained by the method can be rapidly polymerized by a process such as radiation of light or heating according to the type of the cationic polymerization initiator (D) used and can exhibit a high bonding strength.

When a cationic polymerization photoinitiator is used as the cationic polymerization initiator (D), a cationically polymerizable adhesive according to the present invention can be cured by being irradiated with active energy rays such as ultraviolet rays or electron beams.

The irradiation with active energy rays such as ultraviolet rays is preferably performed in the range of 10 to 2000 mJ/cm², more preferably 20 to 1000 mJ/cm², particularly preferably 30 to 800 mJ/cm².

Examples of the source of ultraviolet rays include publicly known lamps such as a xenon lamp, a xenon-mercury lamp, a metal halide lamp, a high-pressure mercury-vapor lamp, and a low-pressure mercury-vapor lamp. The irradiation dose of ultraviolet rays is measured with an UV checker UVR-N1 (manufactured by Japan Storage Battery Co., Ltd.) in the wavelength range of 300 to 390 nm.

After the irradiation with energy rays, the curing may be optionally accelerated by heating preferably at 30°C to 100°C, more preferably at about 40°C to 80°C.

When a cationic polymerization thermal initiator is used as the cationic polymerization initiator (D), a cationically polymerizable adhesive according to the present invention can be cured by being heated at about 50°C to 200°C with a heater such as a far-infrared heater or a hot plate.

A cationically polymerizable adhesive according to the present invention can be used for bonding various base materials together.

Examples of the base materials include plastic base materials and metal base materials.

Examples of the plastic base materials include, as materials that are generally used for plastic molding products such as cellular phones, household electrical appliances, automobile interior and exterior members, and OA equipment, polyester base materials, polyolefin base materials, acrylonitrile-butadiene-styrene resin (ABS resin) base materials, polyacrylic base materials, polyurethane base materials, epoxy resin base materials, and polyvinyl chloride base materials.

Examples of the polyester base materials include sheets and films composed of polyethylene terephthalate and cellulose resins that are suitably used for producing polarizing plates. Examples of the cellulose resins include cellulose acetate, cellulose acetate propionate, cellulose acetate butyrate, cellulose acetate propionate butyrate, and cellulose acetate phthalate.

Examples of the polyolefin base materials include sheets and films composed of cycloolefin polymers, polybutadienes, and the like.

Examples of the metal base materials include stainless steel sheets, aluminum sheets, aluminum alloy sheets, electromagnetic steel sheets, copper sheets, and stainless steel sheets.

An example of a method of applying an adhesive according to the present invention onto a surface of a base material is an application method using a dispenser, a T-die coater, a knife coater, a microgravure coater, or the like.

When a base material to be bonded is a transparent base material through which light such as ultraviolet rays can pass, an adhesive composed of a cationically polymerizable composition containing a cationic polymerization photoinitiator as the cationic polymerization initiator (D) according to the present invention is applied to a surface of a base material; the transparent base material is placed on the coated surface; ultraviolet rays or the like is then radiated from above the transparent base material to cure the adhesive. Thus, a laminate in which the base materials are bonded together with the adhesive layer therebetween can be obtained.

On the other hand, when base materials to be bonded together are base materials through which light such as ultraviolet rays is less likely to pass, a cationically polymerizable adhesive containing a cationic polymerization thermal initiator as the cationic polymerization initiator (D) according to the present invention is applied to a surface of the base material; the other base material is placed on the coated surface; the resultant member is matured under a temperature condition of 50°C to 200°C to cure the adhesive. Thus, the base materials can be bonded together. When a cationic polymerization initiator is used, base materials can also be bonded together by applying an adhesive onto a surface of the base material, irradiating the coated surface with ultraviolet rays or the like, then immediately placing the other base material on the coated surface, and maturing the resultant member.

By using this method, a laminate in which such base materials are bonded together with the adhesive layer formed of an adhesive according to the present invention therebetween can be obtained.

Although the thickness of the adhesive layer varies depending on applications of the laminate, the thickness is preferably in the range of about 0.1 to 5 µm.

A cationically polymerizable adhesive according to the present invention can form an adhesive layer in which a high heat-resistant bonding strength can be maintained in spite of the influence of heat or the like and cracking can be suppressed. Accordingly, the adhesive can be used for, for example, production of polarizing plates used for liquid crystal displays and the like and lamination of optical films used for liquid crystal displays and the like.

A polarizing plate according to the present invention generally includes a protective film and a polarizer that are bonded together with an adhesive layer composed of the cationically polymerizable adhesive therebetween.

The protective film usable for the production of the polarizing plate may be a film or a sheet composed of a cellulose resin such as triacetyl cellulose, a resin having a cycloolefin moiety, an acrylic resin, a norbornene resin, or the like in view of enhancing polarizing characteristics, durability, and the like. In particular, a cellulose resin such as triacetyl cellulose is preferably used.

Examples of the cellulose resin include cellulose acetate, cellulose acetate propionate, cellulose acetate butyrate, cellulose acetate propionate butyrate, cellulose acetate phthalate, and cellulose nitrate. These resins may be used alone or in combination of two or more thereof. In particular, cellulose acetate is preferably used so that films having excellent mechanical properties and transparency can be formed.

The polarizer is not particularly limited and may be selected from various polarizers. For example, the polarizer may be formed by making a plastic base material composed of a hydrophilic polymer such as polyvinyl alcohol, partially formalized polyvinyl alcohol, or a partially saponified product of an ethylene-vinyl acetate copolymer adsorb a dichroic material such as iodine or a dichroic dye and by uniaxially stretching the plastic base material; or the polarizer may be a polyene-based oriented film composed of a dehydration product of polyvinyl alcohol, a dehydrochlorination product of polyvinyl chloride, or the like. In particular, polyvinyl alcohol-based films and films made to adsorb dichroic materials such as iodine are preferably used.

Although the thickness of the protective film used for producing a polarizing plate according to the present invention varies depending on applications of the polarizing plate, the thickness is preferably in the range of about 20 to 100 µm. In general, the thickness of the polarizer is preferably in the range of about 5 to 50 µm.

A polarizing plate according to the present invention can be produced by applying the cationically polymerizable adhesive onto the protective film, subsequently irradiating the coated surface with ultraviolet rays at the above-described dose, and subsequently placing a polarizer on the coated surface to bond the protective film and the polarizer. In this case, the thickness of an adhesive layer composed of the cationically polymerizable adhesive is preferably as small as possible in view of degradation of optical characteristics and the like; specifically, the thickness is preferably 5 µm or less.

A polarizing plate according to the present invention produced by the method can be used for, for example, components of displays of mobile communication terminals such as cellular phones, liquid crystal television receivers, personal computers, handheld gaming devices, and the like.

### EXAMPLES

Hereinafter, the present invention will be described in further detail with reference to Examples and Comparative examples.

### [Preparation example 1]

An isomeric mixture of bisphenol F diglycidyl ether having a chlorine content of 3.5% measured in accordance with JIS K 1200-3-2:2000 was distilled under conditions of 1.3 kPa and 185°C, and subsequently rectified under conditions of 0.02 MPa and 70°C to prepare an aromatic glycidyl ether (C-1) having a chlorine content of 600 ppm.

### [Preparation example 2]

An isomeric mixture of bisphenol A diglycidyl ether having a chlorine content of 3.5% measured in accordance with JIS K 1200-3-2:2000 was distilled under conditions of 1.3 kPa and 185°C, and subsequently rectified under conditions of 0.02 MPa and 70°C to prepare an aromatic glycidyl ether (C-2) having a chlorine content of 600 ppm.

### [Preparation example 3]

Cyclohexanedimethanol diglycidyl ether having a chlorine content of 6.5% measured in accordance with JIS K 1200-3-2:2000 was distilled under conditions of 1.3 kPa and 185°C, and subsequently sequentially rectified under conditions of 0.02 MPa and 70°C to prepare an aliphatic glycidyl ether (C'-3) having a chlorine content of 500 ppm, an aliphatic glycidyl ether (C'-4) having a chlorine content of 1000 ppm, and an aliphatic glycidyl ether (C'-5) having a chlorine content of 10000 ppm.

### [Example 1]

A cationically polymerizable adhesive (1) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.13 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (1) was measured by a method described below and was found to be 190 ppm.

### [Example 2]

A cationically polymerizable adhesive (2) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.32 parts by mass of PEG #1000 (polyoxyethylene glycol manufactured by NOF CORPORATION, number-average molecular weight: 1000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (2) was measured by the method described below and was found to be 201 ppm.

### [Example 3]

A cationically polymerizable adhesive (3) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.65 parts by mass of PEG #2000 (polyoxyethylene glycol manufactured by NOF CORPORATION, number-average molecular weight: 2000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (3) was measured by the method described below and was found to be 197 ppm.

### [Example 4]

A cationically polymerizable adhesive (4) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 1.28 parts by mass of PEG #4000 (polyoxyethylene glycol manufactured by NOF CORPORATION, number-average molecular weight: 4000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (4) was measured by the method described below and was found to be 195 ppm.

### [Example 5]

A cationically polymerizable adhesive (5) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.3 parts by mass of Ymer N-120 (polyoxyethylene glycol manufactured by Perstorp), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (5) was measured by the method described below and was found to be 206 ppm.

### [Example 6]

A cationically polymerizable adhesive (6) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.64 parts by mass of ACTCOL ED-56 (copolymer of polyoxyethylene glycol and polyoxypropylene glycol, manufactured by Mitsui Chemicals, Inc., number-average molecular weight: 2000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (6) was measured by the method described below and was found to be 210 ppm.

### [Example 7]

A cationically polymerizable adhesive (7) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 1 part by mass of ACTCOL ED-36 (copolymer of polyoxyethylene glycol and polyoxypropylene glycol, manufactured by Mitsui Chemicals, Inc., number-average molecular weight: 3000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (7) was measured by the method described below and was found to be 198 ppm.

### [Example 8]

A cationically polymerizable adhesive (8) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-223 (1,3-bis[(3-ethyloxetane-3-yl)methoxy]benzene manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.13 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (8) was measured by the method described below and was found to be 200 ppm.

### [Example 9]

A cationically polymerizable adhesive (9) was prepared by mixing and stirring, with a closed planetary mixer, 20.0 parts by mass of the aromatic glycidyl ether (C-2), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.13 parts by mass of PEG #400 (polyoxyethylene glycol manufactured by NOF CORPORATION), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (9) was measured by the method described below and was found to be 198 ppm.

### [Example 10]

A cationically polymerizable adhesive (10) was prepared by mixing and stirring, with a closed planetary mixer, 20.0 parts by mass of the aromatic glycidyl ether (C-1), 20.0 parts by mass of the aliphatic glycidyl ether (C'-4), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.13 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (10) was measured by the method described below and was found to be 302 ppm.

### [Example 11]

A cationically polymerizable adhesive (11) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 1 part by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (11) was measured by the method described below and was found to be 196 ppm.

### [Example 12]

A cationically polymerizable adhesive (12) was prepared by mixing and stirring, with a closed planetary mixer, 20.0 parts by mass of the aromatic glycidyl ether (C-1), 20.0 parts by mass of the aliphatic glycidyl ether (C'-3), 57.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 2 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (12) was measured by the method described below and was found to be 205 ppm.

### [Example 13]

A cationically polymerizable adhesive (13) was prepared by mixing and stirring, with a closed planetary mixer, 20.0 parts by mass of the aromatic glycidyl ether (C-1), 20.0 parts by mass of the aliphatic glycidyl ether (C'-3), 56.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 2.8 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (13) was measured by the method described below and was found to be 199 ppm.

### [Example 14]

A cationically polymerizable adhesive (14) was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 1.0 part by mass of Ymer N-120 (polyoxyethylene glycol manufactured by Perstorp), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (14) was measured by the method described below and was found to be 193 ppm.

### [Example 15]

A cationically polymerizable adhesive (15) was prepared by mixing and stirring, with a closed planetary mixer, 20.0 parts by mass of the aromatic glycidyl ether (C-1), 20.0 parts by mass of the aliphatic glycidyl ether (C'-3), 57.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 2.0 parts by mass of Ymer N-120 (polyoxyethylene glycol manufactured by Perstorp), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (15) was measured by the method described below and was found to be 198 ppm.

### [Example 16]

A cationically polymerizable adhesive (16) was prepared by mixing and stirring, with a closed planetary mixer, 20.0 parts by mass of the aromatic glycidyl ether (C-1), 20.0 parts by mass of the aliphatic glycidyl ether (C'-3), 56.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 2.8 parts by mass of Ymer N-120 (polyoxyethylene glycol manufactured by Perstorp), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (16) was measured by the method described below and was found to be 205 ppm.

### [Example 17]

A cationically polymerizable adhesive (17) was prepared by mixing and stirring, with a closed planetary mixer, 20.0 parts by mass of the aromatic glycidyl ether (C-1), 20.0 parts by mass of the aliphatic glycidyl ether (C'-5), 58 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.13 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (17) was measured by the method described below and was found to be 2087 ppm.

### [Comparative example 1]

A cationically polymerizable adhesive (1') was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (1') was measured by the method described below and was found to be 198 ppm.

### [Comparative example 2]

A cationically polymerizable adhesive (2') was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.5 parts by mass of PEG #6000 (polyoxyethylene glycol manufactured by NOF CORPORATION, number-average molecular weight: 6000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (2') was measured by the method described below and was found to be 200 ppm.

### [Comparative example 3]

A cationically polymerizable adhesive (3') was prepared by mixing and stirring, with a closed planetary mixer, 20.0 parts by mass of the aromatic glycidyl ether (C-1), 20.0 parts by mass of the aliphatic glycidyl ether (C'-3), 58.0 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 0.5 parts by mass of PEG #11000 (polyoxyethylene glycol manufactured by NOF CORPORATION, number-average molecular weight: 11000), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (3') was measured by the method described below and was found to be 210 ppm.

### [Comparative example 4]

A cationically polymerizable adhesive (4') was prepared by mixing and stirring, with a closed planetary mixer, 20.0 parts by mass of the aromatic glycidyl ether (C-1), 20.0 parts by mass of the aliphatic glycidyl ether (C'-3), 55.5 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 3.3 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (4') was measured by the method described below and was found to be 200 ppm.

### [Comparative example 5]

A cationically polymerizable adhesive (5') was prepared by mixing and stirring, with a closed planetary mixer, 20.0 parts by mass of the aromatic glycidyl ether (C-1), 20.0 parts by mass of the aliphatic glycidyl ether (C'-3), 54 parts by mass of ARON OXETANE OXT-221 (bis[1-ethyl(3-oxetanyl)] methyl ether manufactured by TOAGOSEI CO., LTD.), 1.0 part by mass of CELLOXIDE 2021P (3,4-epoxycyclohexenylmethyl-3',4'-epoxycyclohexene carboxylate manufactured by DAICEL CHEMICAL INDUSTRIES, LTD.), 5.0 parts by mass of PEG #400 (polyoxyethylene glycol manufactured by NOF CORPORATION, number-average molecular weight: 400), 0.5 parts by mass of KBE-403 (3-glycidoxypropyltriethoxysilane manufactured by Shin-Etsu Chemical Co., Ltd.), and 8.0 parts by mass of CPI-100P (50 mass% propylene carbonate solution of diphenyl-4-(phenylthio)phenylsulfonium hexafluorophosphate manufactured by San-Apro Ltd.). The chlorine content in the entire amount of the resultant cationically polymerizable adhesive (5') was measured by the method described below and was found to be 208 ppm.

### [Method for producing polarizer]

An aqueous solution of polyvinyl alcohol (nonvolatile content: 8 mass%) obtained by dissolving KURARAY POVAL PVA-117H (polyvinyl alcohol manufactured by KURARAY CO., LTD.; polymerization degree: 1700; completely saponified product; powder) in water was applied with a bar coater onto a removable film. The applied solution was subsequently dried at 80°C for 5 minutes and the removable film was then removed. As a result, a polyvinyl alcohol film having a thickness of 75 µm was formed.

The obtained polyvinyl alcohol film was then secured in a stretching machine and uniaxially stretched in hot water at 40°C such that the length thereof was tripled.

Water adhering to the surfaces of the thus-stretched film was removed. The stretched film was then immersed in an aqueous solution adjusted to be 30°C and containing 0.02 parts by mass of iodine, 2 parts by mass of potassium iodide, and 100 parts by mass of water.

The stretched film was then immersed in an aqueous solution adjusted to be 56.5°C and containing 12 parts by mass of potassium iodide, 5 parts by mass of boric acid, and 100 parts by mass of water.

The stretched film having been immersed was cleaned in pure water adjusted to be 8°C and then dried at 65°C to provide a polarizer (polarizing film) in which iodine adhered to and oriented on the surfaces of the stretched film composed of polyvinyl alcohol.

### [Method for producing polarizing plate]

Each of the cationically polymerizable adhesives obtained in Examples and Comparative examples was applied onto one surfaces of two triacetyl cellulose films (thickness: 80 µm, longitudinal length: 297 mm, transverse length: 210 mm) having been subjected to a corona treatment with an applicator so as to form layers having a thickness of about 2 µm. The coated surfaces were irradiated with ultraviolet rays at 30 to 100 mJ/cm² with a UV-radiation conveyor apparatus CSOT-40 (high-pressure mercury-vapor lamp, intensity: 120 W/cm, manufactured by Japan Storage Battery Co., Ltd.).

These two triacetyl cellulose films were then bonded to both surfaces of the polarizer (thickness: 42 µm, longitudinal length: 297 mm, transverse length: 210 mm obtained by the above-described method. These components were bonded together by being pressed with a rubber roller. The resultant member was heated in a dryer at 60°C for a minute to produce a polarizing plate.

### [Method for evaluating heat-resistant bonding strength]

The polarizing plates obtained in Examples and Comparative examples were left in a dryer at 85°C for 3000 hours. Subsequently, each polarizing plate was measured in terms of peel strength at the interface between triacetyl cellulose and the polarizer that constituted the polarizing plate with a tensile tester (manufactured by IMADA SEISAKUSHO CO., LTD., tension speed: 50 mm/min, T-shaped peeling). Cases where the peel strength was 10 N/25 mm or more and cases where material breaking (MB) of a triacetyl cellulose film occurred were evaluated as "Good". Cases where the peel strength was less than 10 N/25 mm were evaluated as "Poor".

### [Method for evaluating cracking in adhesive layer of polarizing plate]

The polarizing plates obtained above were subjected to a process of being left in an environment at -20°C for an hour and then immediately moved to and left in an environment at 70°C for an hour. This process was defined as a single cycle and a test of subjecting the polarizing plates to 200 cycles was performed. After this test was completed, the polarizing plates were visually inspected for cracking of the adhesive layers.

Good: No cracks were observed.
Poor: One or more cracks were observed.

### [Evaluation of tinting, discoloration, or the like of polarizer]

The polarizing plates were evaluated in terms of tinting, discoloration, or the like in the following manner. The polarizing plates produced by the above-described method were left in a dryer at 85°C for 1500 hours; and polarizing plates having polarizers that completely maintained their appearance after being left in the dryer were evaluated as "Good"; and polarizing plates having polarizers that were tinted or discolored after being left in the dryer were evaluated as "Poor".

### [Method for measuring entire chlorine content]

The chlorine content of the cationically polymerizable adhesives was measured in accordance with JIS K 1200-3-2:2000. Specifically, for an adhesive whose chlorine content according to the present invention was 0.05% or more in terms of sodium chloride, a value measured by the modified volhard method was defined as the chlorine content of the adhesive; and, for an adhesive whose chlorine content according to the present invention was less than 0.05%, a value measured by ion chromatography analysis was defined as the chlorine content of the adhesive.

**[Table 1]**

| Table 1 | | Example 1 | Example 2 | Example 3 | Example 4 | Example 5 |
|---|---|---|---|---|---|---|
| Polyether polyol (a) | | | | | | |
| PEG #400 | Parts by mass | 0.13 | - | - | - | - |
| PEG #1000 | | - | 0.32 | - | - | - |
| PEG #2000 | | - | - | 0.65 | | |
| PEG #4000 | | - | - | - | 1.28 | - |
| Ymer N-120 | | - | - | - | - | 0.3 |
| ED-56 | | - | - | - | - | - |
| ED-36 | | - | - | - | - | - |

| Oxetanyl-group-containing compound (b) | | | | | | |
|---|---|---|---|---|---|---|
| OXT-221 (bifunctional) | Parts by mass | 58 | 58 | 58 | 58 | 58 |
| OXT-223 (bifunctional) | | - | - | - | - | - |

| Aromatic glycidyl ether (c) | | | | | | |
|---|---|---|---|---|---|---|
| C-1 | Parts by mass | 20 | 20 | 20 | 20 | 20 |
| C-2 | | - | - | - | - | - |
| Aliphatic glycidyl ether | | | | | | |
| C'-3 | Parts by mass | 20 | 20 | 20 | 20 | 20 |
| C'-4 | | - | - | - | - | - |

| Alicyclic epoxy compound (E) | | | | | | |
|---|---|---|---|---|---|---|
| CEL 2021P | Parts by mass | 1 | 1 | 1 | 1 | 1 |
| Epoxy-group-containing silane compound (F) | | | | | | |
| KBE-403 | Parts by mass | 0.5 | 0.5 | 0.5 | 0.5 | 0.5 |

| Cationic polymerization photoinitiator (D) | | | | | | |
|---|---|---|---|---|---|---|
| CPI-100P | Parts by mass | 8 | 8 | 8 | 8 | 8 |
| Content (mass%) of polyether polyol (a) | | 0.13 | 0.33 | 0.66 | 1.3 | 0.31 |
| Chlorine content (ppm) of adhesive | | 190 | 201 | 197 | 195 | 206 |
| Heat-resistant bonding strength (N/25mm) | | 14.5 | 14.4 | 13.7 | 12.2 | 13.7 |
| Heat-resistant bonding strength (Evaluation) | | Good | Good | Good | Good | Good |
| Cracking of adhesive layer (Evaluation) | | Good | Good | Good | Good | Good |
| Tinting or the like of polarizer | | Good | Good | Good | Good | Good |

**[Table 2]**

| Table 2 | | Example 6 | Example 7 | Example 8 | Example 9 | Example 10 | Example 11 |
|---|---|---|---|---|---|---|---|
| Polyether polyol (a) | | | | | | | |
| PEG #400 | Parts by mass | - | - | 0.13 | 0.13 | 0.13 | 1 |
| PEG #1000 | | - | - | - | - | - | - |
| PEG #2000 | | - | - | - | - | - | - |
| PEG #4000 | | - | - | - | - | - | - |
| Ymer N-120 | | - | - | - | - | - | - |
| ED-56 | | 0.64 | - | - | - | - | - |
| ED-36 | | - | 1 | - | - | - | - |

| Oxetanyl-group-containing compound (b) | | | | | | | |
|---|---|---|---|---|---|---|---|
| OXT-221 (bifunctional) | Parts by mass | 58 | 58 | - | 58 | 58 | 58 |
| OXT-223 (bifunctional) | | - | - | 58 | - | - | - |

| Aromatic glycidyl ether (c) | | | | | | | |
|---|---|---|---|---|---|---|---|
| C-1 | Parts by mass | 20 | 20 | 20 | - | 20 | 20 |
| C-2 | | - | - | - | 20 | - | - |

| Aliphatic glycidyl ether | | | | | | | |
|---|---|---|---|---|---|---|---|
| C'-3 | Parts by mass | 20 | 20 | 20 | 20 | - | 20 |
| C'-4 | | - | - | - | - | 20 | - |

| Alicyclic epoxy compound (E) | | | | | | | |
|---|---|---|---|---|---|---|---|
| CEL 2021P | Parts by mass | 1 | 1 | 1 | 1 | 1 | 1 |
| Epoxy-group-containing silane compound (F) | | | | | | | |
| KBE-403 | Parts by mass | 0.5 | 0.5 | 0.5 | 0.5 | 0.5 | 0.5 |

| Cationic polymerization photoinitiator (D) | | | | | | | |
|---|---|---|---|---|---|---|---|
| CPI-100P | Parts by mass | 8 | 8 | 8 | 8 | 8 | 8 |
| Content (mass%) of polyether polyol (a) | | 0.65 | 1.02 | 0.13 | 0.13 | 0.13 | 1.02 |
| Chlorine content (ppm) of adhesive | | 210 | 198 | 200 | 198 | 302 | 196 |
| Heat-resistant bonding strength (N/25mm) | | 11.8 | 12.4 | 13.7 | 14.8 | 14.2 | 13.9 |
| Heat-resistant bonding strength (Evaluation) | | Good | Good | Good | Good | Good | Good |
| Cracking of adhesive layer (Evaluation) | | Good | Good | Good | Good | Good | Good |
| Tinting or the like of polarizer | | Good | Good | Good | Good | Good | Good |

**[Table 3]**

| Table 3 | | Example 12 | Example 13 | Example 14 | Example 15 | Example 16 | Example 17 |
|---|---|---|---|---|---|---|---|
| Polyether polyol (a) | | | | | | | |
| PEG #400 | Parts by mass | 2 | 2.8 | - | - | - | 0.13 |
| PEG #1000 | | - | - | - | - | - | - |
| PEG #2000 | | - | - | - | - | | |
| PEG #4000 | | - | - | - | - | - | - |
| Ymer N-120 | | - | - | 1 | 2 | 2.8 | - |
| ED-56 | | - | - | - | - | - | - |
| ED-36 | | - | - | - | - | - | - |

| Oxetanyl-group-containing compound (b) | | | | | | | |
|---|---|---|---|---|---|---|---|
| OXT-221 (bifunctional) | Parts by mass | 57 | 56 | 58 | 57 | 56 | 58 |
| OXT-223 (bifunctional) | | - | - | - | - | - | - |

| Aromatic glycidyl ether (c) | | | | | | | |
|---|---|---|---|---|---|---|---|
| C-1 | Parts by mass | 20 | 20 | 20 | 20 | 20 | 20 |
| C-2 | | - | - | - | - | - | - |

| Aliphatic glycidyl ether | | | | | | | |
|---|---|---|---|---|---|---|---|
| C'-3 | Parts by mass | 20 | 20 | 20 | 20 | 20 | - |
| C'-5 | | - | - | - | - | - | 20 |

| Alicyclic epoxy compound (E) | | | | | | | |
|---|---|---|---|---|---|---|---|
| CEL 2021P | Parts by mass | 1 | 1 | 1 | 1 | 1 | 1 |

| Epoxy-group-containing silane compound (F) | | | | | | | |
|---|---|---|---|---|---|---|---|
| KBE-403 | Parts by mass | 0.5 | 0.5 | 0.5 | 0.5 | 0.5 | 0.5 |

| Cationic polymerization photoinitiator (D) | | | | | | | |
|---|---|---|---|---|---|---|---|
| CPI-100P | Parts by mass | 8 | 8 | 8 | 8 | 8 | 8 |
| Content (mass%) of polyether polyol (a) | | 2.06 | 2.9 | 1.02 | 2.06 | 2.9 | 0.13 |
| Chlorine content (ppm) of adhesive | | 205 | 199 | 193 | 198 | 205 | 2087 |
| Heat-resistant bonding strength (N/25mm) | | 12.7 | 12.1 | 13.9 | 12.7 | 12.4 | 10.9 |
| Heat-resistant bonding strength (Evaluation) | | Good | Good | Good | Good | Good | Good |
| Cracking of adhesive layer (Evaluation) | | Good | Good | Good | Good | Good | Good |
| Tinting or the like of polarizer | | Good | Good | Good | Good | Good | Good |

**[Table 4]**

| Table 4 | | Comparative example 1 | Comparative example 2 | Comparative example 3 | Comparative example 4 | Comparative example 5 |
|---|---|---|---|---|---|---|
| Polyether polyol (a') | | | | | | |
| PEG #400 | Parts by mass | - | - | - | 3.3 | 5 |
| PEG #6000 | | - | 0.5 | - | - | - |
| PEG #11000 | | - | - | 0.5 | - | - |
| Ymer N-120 | | - | - | - | - | - |

| Oxetanyl-group-containing compound (B) | | | | | | |
|---|---|---|---|---|---|---|
| OXT-221 (bifunctional) | Parts by mass | 58 | 58 | 58 | 55.5 | 54 |
| OXT-223 (bifunctional) | | - | - | - | - | - |

| Aromatic glycidyl ether (c) | | | | | | |
|---|---|---|---|---|---|---|
| C-1 | Parts by mass | 20 | 20 | 20 | 20 | 20 |
| C-2 | | - | - | - | - | - |

| Aliphatic glycidyl ether | | | | | | |
|---|---|---|---|---|---|---|
| C'-3 | Parts by mass | 20 | 20 | 20 | 20 | 20 |
| C'-5 | | - | - | - | - | - |

| Alicyclic epoxy compound (E) | | | | | | |
|---|---|---|---|---|---|---|
| CEL 2021P | Parts by mass | 1 | 1 | 1 | 1 | 1 |

| Epoxy-group-containing silane compound (F) | | | | | | |
|---|---|---|---|---|---|---|
| KBE-403 | Parts by mass | 0.5 | 0.5 | 0.5 | 0.5 | 0.5 |

| Cationic polymerization photoinitiator (D) | | | | | | |
|---|---|---|---|---|---|---|
| CPI-100P | Parts by mass | 8 | 8 | 8 | 8 | 8 |
| Content (mass%) of polyether polyol | | 0 | 0.51 | 0.51 | 3.46 | 5.32 |
| Chlorine content (ppm) of adhesive | | 198 | 200 | 210 | 200 | 208 |
| Heat-resistant bonding strength (N/25mm) | | 15.8 | 6.7 | 5.8 | 5.5 | 6.2 |
| Heat-resistant bonding strength (Evaluation) | | Good | Poor | Poor | Poor | Poor |
| Cracking of adhesive layer (Evaluation) | | Poor | Good | Good | Good | Good |
| Tinting or the like of polarizer | | Good | Good | Good | Good | Good |

The abbreviations and the like in Tables 1 to 4 will be described.
"PEG #400"; polyoxyethylene glycol having a number-average molecular weight of 400, manufactured by NOF CORPORATION
"PEG #1000"; polyoxyethylene glycol having a number-average molecular weight of 1000, manufactured by NOF CORPORATION
"PEG #2000"; polyoxyethylene glycol having a number-average molecular weight of 2000, manufactured by NOF CORPORATION
"PEG #4000"; polyoxyethylene glycol having a number-average molecular weight of 4000, manufactured by NOF CORPORATION
"PEG #6000"; polyoxyethylene glycol having a number-average molecular weight of 6000, manufactured by NOF CORPORATION
"PEG #11000"; polyoxyethylene glycol having a number-average molecular weight of 11000, manufactured by NOF CORPORATION
"Ymer N-120"; polyoxyethylene glycol having a molecular weight of 1000, manufactured by Perstorp
"ED-56"; copolymer of polyoxyethylene glycol and polyoxypropylene glycol, having a number-average molecular weight of 2000, manufactured by Mitsui Chemicals, Inc.
"ED-36"; copolymer of polyoxyethylene glycol and polyoxypropylene glycol, having a number-average molecular weight of 3000, manufactured by Mitsui Chemicals, Inc.
"OXT-221"; ARON OXETANE OXT-221, bis[1-ethyl(3-oxetanyl)] methyl ether manufactured by TOAGOSEI CO., LTD.
"OXT-223"; ARON OXETANE OXT-223, 1,3-bis[(3-ethyloxetane-3-yl)methoxy]benzene manufactured by TOAGOSEI CO., LTD.
"C-1"; aromatic glycidyl-ether-group-containing compound having a chlorine content of 600 ppm and obtained in Preparation example 1
"C-2"; aromatic glycidyl-ether-group-containing compound having a chlorine content of 600 ppm and obtained in Preparation example 2
"C'-3"; glycidyl-ether-group-containing compound having a chlorine content of 500 ppm and obtained in Preparation example 3
"C'-4"; glycidyl-ether-group-containing compound having a chlorine content of 1000 ppm and obtained in Preparation example 3
"CEL 2021P"; CELLOXIDE 2021P, 3,4-epoxycyclohexenylmethyl-3',4'-epoxycyclohexene carboxylate manufactured by DAICEL CHEMICAL INDUSTRIES, LTD.
"KBE-403"; 3-glycidoxypropyltriethoxysilane manufactured by Shin-Etsu Chemical Co., Ltd.
"CPI-100P"; 50 mass% propylene carbonate solution of diphenyl-4-(phenylthio)phenylsulfonium hexafluorophosphate manufactured by San-Apro Ltd.
"C'-5"; glycidyl-ether-group-containing compound having a chlorine content of 10000 ppm and obtained in Preparation example 3
"Content of polyether polyol"; percentage by mass of the polyether polyol (a) with respect to the total amount of the polyol (A), the oxetanyl-group-containing compound (B), and the glycidyl ether (C) in the adhesive

## Claims

1. A cationically polymerizable adhesive comprising: a polyol (A) containing a polyether polyol (a) that has one or more moieties selected from the group consisting of a polyoxyethylene moiety and a polyoxypropylene moiety and has a number-average molecular weight of 300 to 5000; an oxetanyl-group-containing compound (B) containing an oxetanyl-group-containing compound (b) having a molecular weight of 100 to 800 calculated based on the formula weight; a glycidyl ether (C) containing an aromatic glycidyl ether (c); and a cationic polymerization initiator (D), wherein a content of the polyether polyol (a) is 0.05 to 3 parts by mass with respect to 100 parts by mass of the polyol (A), the oxetanyl-group-containing compound (B), and the glycidyl ether (C) in total.

2. The cationically polymerizable adhesive according to Claim 1, wherein a content of chlorine, measured in accordance with JIS K 1200-3-2:2000, remaining in an entire amount of the cationically polymerizable adhesive is 1500 ppm or less.

3. The cationically polymerizable adhesive according to Claim 1, wherein the polyether polyol (a) is polyoxyethylene glycol.

4. The cationically polymerizable adhesive according to Claim 1, wherein the oxetanyl-group-containing compound (b) is bis[1-ethyl(3-oxetanyl)] methyl ether.

5. The cationically polymerizable adhesive according to Claim 1, wherein the aromatic glycidyl ether (c) is one or more selected from the group consisting of bisphenol A diglycidyl ether and bisphenol F diglycidyl ether.

6. The cationically polymerizable adhesive according to Claim 1, further comprising an alicyclic epoxy compound (E).

7. The cationically polymerizable adhesive according to Claim 6, wherein the alicyclic epoxy compound (E) is one or more selected from the group consisting of 3,4-epoxycyclohexenylmethyl-3,4-epoxycyclohexane carboxylate and 1-methyl-4-(2-methyloxiranyl)-7-oxabicyclo[4.1.0]heptane.

8. The cationically polymerizable adhesive according to Claim 1, further comprising an epoxy-group-containing silane compound (F).

9. The cationically polymerizable adhesive according to Claim 8, wherein a content of the epoxy-group-containing silane compound (F) with respect to an entire amount of the cationically polymerizable adhesive is 0.1 to 1.5 mass%.

10. The cationically polymerizable adhesive according to Claim 8, wherein the epoxy-group-containing silane compound (F) is one or more selected from the group consisting of 3-glycidoxypropyltriethoxysilane, 3-glycidoxypropyltrimethoxysilane, 3-glycidoxypropylmethyldiethoxysilane, 3-glycidoxypropylmethyldimethoxysilane, 2-(3,4-epoxycyclohexyl)ethyltriethoxysilane, and 2-(3,4-epoxycyclohexyl)ethyltrimethoxysilane.

11. The cationically polymerizable adhesive according to any one of Claims 1 to 10, being used for bonding a polarizer and a protective film to form a polarizing plate.

12. A polarizing plate comprising a protective film and a polarizer that are bonded together through a cationically polymerizable adhesive, wherein the cationically polymerizable adhesive is the cationically polymerizable adhesive according to Claim 11.

## Patentansprüche

1. Kationisch polymerisierbarer Klebstoff, umfassend: ein Polyol (A), das ein Polyetherpolyol (a) enthält, das eine oder mehrere Gruppierung(en), ausgewählt aus der Gruppe, bestehend aus einer Polyoxyethylengruppierung und einer Polyoxypropylengruppierung, hat und ein zahlenmittleres Molekulargewicht von 300 bis 5000 hat; eine Oxetanylgruppe-enthaltende Verbindung (B), die eine Oxetanylgruppe-enthaltende Verbindung (b) mit einem Molekulargewicht von 100 bis 800, berechnet auf der Basis des Formelgewichts, enthält; einen Glycidylether (C), der einen aromatischen Glycidylether (c) enthält; und einen kationischen Polymerisationsinitiator (D), wobei der Gehalt des Polyetherpolyols (a) 0,05 bis 3 Massenteile, bezogen auf 100 Massenteile des Polyols (A), der Oxetanylgruppe-enthaltenden Verbindung (B) und des Glycidylethers (C) insgesamt, ist.

2. Kationisch polymerisierbarer Klebstoff gemäß Anspruch 1, wobei der Gehalt an Chlor, gemessen gemäß JIS K 1200-3-2:2000, der in einer Gesamtmenge des kationisch polymerisierbaren Klebstoffs zurückbleibt, 1500 ppm oder weniger ist.

3. Kationisch polymerisierbarer Klebstoff gemäß Anspruch 1, wobei das Polyetherpolyol (a) Polyoxyethylenglycol ist.

4. Kationisch polymerisierbarer Klebstoff gemäß Anspruch 1, wobei die Oxetanylgruppe-enthaltende Verbindung (b) Bis[1-ethyl(3-oxetanyl)]methylether ist.

5. Kationisch polymerisierbarer Klebstoff gemäß Anspruch 1, wobei der aromatische Glycidylether (c) einer oder mehrere, ausgewählt aus der Gruppe, bestehend aus Bisphenol-A-diglycidylether und Bisphenol-F-diglycidylether, ist.

6. Kationisch polymerisierbarer Klebstoff gemäß Anspruch 1, der außerdem eine alicyclische Epoxidverbindung (E) umfasst.

7. Kationisch polymerisierbarer Klebstoff gemäß Anspruch 6, wobei die alicyclische Epoxidverbindung (E) eine oder mehrere ist, ausgewählt aus der Gruppe, bestehend aus 3,4-Epoxycyclohexenylmethyl-3,4-epoxycyclohexancarboxylat und 1-Methyl-4-(2-methyloxiranyl)-7-oxabicyclo[4.1.0]heptan.

8. Kationisch polymerisierbarer Klebstoff gemäß Anspruch 1, der außerdem eine Epoxidgruppe-enthaltende Silanverbindung (F) umfasst.

9. Kationisch polymerisierbarer Klebstoff gemäß Anspruch 8, wobei der Gehalt der Epoxidgruppe-enthaltenden Silanverbindung (F), bezogen auf eine Gesamtmenge des kationisch polymerisierbaren Klebstoffs, 0,1 bis 1,5 Masse-% ist.

10. Kationisch polymerisierbarer Klebstoff gemäß Anspruch 8, wobei die Epoxidgruppe-enthaltende Silanverbindung (F) eine oder mehrere, ausgewählt aus der Gruppe, bestehend aus 3-Glycidoxypropyltriethoxysilan, 3-Glycidoxypropyltrimethoxysilan, 3-Glycidoxypropylmethyldiethoxysilan, 3-Glycidoxypropylmethyldimethoxysilan, 2-(3,4-Epoxycyclohexyl)ethyltriethoxysilan und 2-(3,4-Epoxycyclohexyl)ethyltrimethoxysilan, ist.

11. Kationisch polymerisierbarer Klebstoff gemäß einem der Ansprüche 1 bis 10, der zum Verkleben eines Polarisators und eines Schutzfilms unter Bildung einer Polarisationsplatte verwendet wird.

12. Polarisationsplatte, die einen Schutzfilm und einen Polarisator umfasst, die durch einen kationisch polymerisierbaren Klebstoff aneinander geklebt sind, wobei der kationisch polymerisierbare Klebstoff der kationisch polymerisierbare Klebstoff gemäß Anspruch 11 ist.

## Revendications

1. Adhésif polymérisable par voie cationique comprenant : un polyol (A) contenant un polyéther polyol (a) qui contient un ou plusieurs fragments sélectionnés dans le groupe constitué d'un fragment polyoxyéthylène et d'un fragment polyoxypropylène et présente un poids moléculaire moyen en nombre de 300 à 5000 ; un composé contenant un groupe oxétanyle (B) contenant un composé contenant un groupe oxétanyle (b) présentant un poids moléculaire de 100 à 800 calculé sur la base du poids de la formule ; un glycidyl éther (C) contenant un glycidyl éther aromatique (c) ; et un initiateur de polymérisation cationique (D), dans lequel une teneur du polyéther polyol (a) est de 0,05 à 3 parties en masse par rapport à 100 parties en masse du polyol (A), du composé contenant un groupe oxétanyle (B), et du glycidyl éther (C) au total.

2. Adhésif polymérisable par voie cationique selon la revendication 1, dans lequel une teneur en chlore, mesurée selon la norme JIS K 1200-3-2:2000, restant dans une quantité entière de l'adhésif polymérisable par voie cationique est de 1500 ppm ou moins.

3. Adhésif polymérisable par voie cationique selon la revendication 1, dans lequel le polyéther polyol (a) est un polyoxyéthylène glycol.

4. Adhésif polymérisable par voie cationique selon la revendication 1, dans lequel le composé contenant un groupe oxétanyle (b) est le bis[1-éthyl(3-oxétanyl)]méthyl éther.

5. Adhésif polymérisable par voie cationique selon la revendication 1, dans lequel le glycidyl éther aromatique (c) est un ou plusieurs sélectionnés dans le groupe constitué du bisphénol A diglycidyl éther et du bisphénol F diglycidyl éther.

6. Adhésif polymérisable par voie cationique selon la revendication 1, comprenant en outre un composé d'époxy alicyclique (E).

7. Adhésif polymérisable par voie cationique selon la revendication 6, dans lequel le composé d'époxy alicyclique (E) est un ou plusieurs sélectionnés dans le groupe constitué du 3,4-époxy-cyclohexane carboxylate de 3,4-époxycyclohexènylméthyle et du 1-méthyl-4-(2-méthyloxiranyl)-7-oxabicyclo[4.1.0]heptane.

8. Adhésif polymérisable par voie cationique selon la revendication 1, comprenant en outre un composé de silane contenant un groupe époxy (F).

9. Adhésif polymérisable par voie cationique selon la revendication 8, dans lequel une teneur du composé de silane contenant un groupe époxy (F) par rapport à une quantité entière de l'adhésif polymérisable par voie cationique est de 0,1 à 1,5 % en masse.

10. Adhésif polymérisable par voie cationique selon la revendication 8, dans lequel le composé de silane contenant un groupe époxy (F) est un ou plusieurs sélectionnés dans le groupe constitué du 3-glycidoxypropyltriéthoxysilane, du 3-glycidoxypropyltriméthoxysilane, du 3-glycidoxypropylméthyldiéthoxysilane, du 3-glycidoxypropylméthyl-diméthoxysilane, du 2-(3,4-époxycyclohexyl)éthyltriéthoxysilane, et du 2-(3,4-époxycyclohexyl)éthyltriméthoxysilane.

11. Adhésif polymérisable par voie cationique selon l'une quelconque des revendications 1 à 10, étant utilisé pour coller un polariseur et un film protecteur afin de former une plaque de polarisation.

12. Plaque de polarisation comprenant un film protecteur et un polariseur qui sont liés ensemble par l'intermédiaire d'un adhésif polymérisable par voie cationique, dans lequel l'adhésif polymérisable par voie cationique est l'adhésif polymérisable par voie cationique selon la revendication 11.
